# FASCICULE DE BREVET EUROPEEN

(11) **EP 1 775 270 B1**
(45) Date de publication et mention de la délivrance du brevet: **01.09.2010**
(21) Numéro de dépôt: 06291589.7
(22) Date de dépôt: 11.10.2006
(51) Int. Cl.: C04B 7/345

(54) **Liant hydraulique à faible émission en CO2**
Hydraulisches Bindemittel mit niedrige CO2-Emission
Hydraulic binder with low CO2 emmision

(30) Priorité: 17.10.2005 FR 0510573
(43) Date de publication de la demande: 18.04.2007
(73) Titulaire: VICAT, 92095 Paris La Défense Cedex (FR)
(72) Inventeur: Sommain, Denis, 38300 Culin (FR)
(74) Mandataire: Giraud, Françoise

(56) Documents cités:
- FR-A- 2 694 552
- US-A1- 2004 040 474
- US-B1- 6 641 658

## Description

L'invention concerne le domaine des liants hydrauliques.

Plus précisément, elle concerne de nouvelles compositions de liants hydrauliques présentant de remarquables propriétés mécaniques, en particulier un temps de prise réglable et des résistances élevées dès les premières heures et pouvant être préparées en respectant de façon remarquable l'environnement, notamment du fait de basses émissions de dioxyde de carbone lors de leur élaboration.

Il est bien connu que l'industrie cimentière est grosse consommatrice d'énergie.

Par ailleurs, cette industrie, du fait des réactions mises en oeuvre et des procédés utilisés, génère du gaz carbonique qui contribue à la pollution de l'atmosphère.

Ce gaz carbonique provient à la fois de la combustion mise en oeuvre pour réaliser la cuisson de la matière première nécessaire à l'élaboration du ciment et des réactions chimiques mises en oeuvre lors de cette étape de cuisson, tout particulièrement de la réaction de décarbonatation des carbonates constituant toujours une part importante de cette matière première.

En tenant compte de ces deux sources d'émission de gaz carbonique dans l'industrie du ciment, différentes voies ont été utilisées depuis de nombreuses années pour tenter de diminuer cette pollution.

Il s'agit soit de recourir à des carburants de substitution permettant de limiter les émanations de gaz carbonique soit de modifier la nature de la matière première utilisée pour l'élaboration du ciment, afin de limiter les émanations de gaz carbonique lors de l'étape de cuisson de cette matière première.

C'est dans cette deuxième voie qu'ont travaillé les inventeurs de la présente invention en réalisant des essais systématiques destinés à mettre au point des compositions de liants hydrauliques à faible émission de CO₂.

Il est connu que l'une des voies pour modifier la composition d'un ciment en vue de diminuer les émissions de CO₂ est de recourir à l'utilisation de laitiers en provenance des hauts fourneaux, de cendres volantes de centrales électriques, de pouzzolanes naturelles ou synthétiques, et cela, en vue de diminuer la quantité de clinker requise pour la préparation du ciment et, par conséquent, les émission de CO₂.

Toutefois, il est bien connu que ces différentes utilisations nuisent généralement aux résistances mécaniques aux jeunes âges (avant 7 jours).

La demande internationale WO 94/03407 décrit des liants hydrauliques à prise et durcissement rapides et des mélanges de liants les contenant. Cette demande décrit plus particulièrement des liants hydrauliques contenant de 50 à 99% en poids d'un ciment naturel résultant de la calcination à une température de 900 à 1.200°C d'une seule et même matière première renfermant des phases argileuses sulfurées et du carbonate de calcium en mélange intime et de 1 à 50% d'un produit pouzzolanique. Cette même demande décrit également des mélanges de ces liants et avec des ciments de type Portland.

L'inventeur de la présente invention s'est aperçu qu'en réalisant de façon systématique de nombreux mélanges préparés notamment à partir de ciments naturels présentant des compositions minéralogiques bien déterminées avec des ciments de type Portland enrichis en matériaux pouzzolaniques, il était possible d'accéder à des compositions de liants hydrauliques à basse émission en CO₂ et présentant de remarquables propriétés mécaniques et des propriétés de prise rapide, malgré leur très forte teneur en matériaux de type pouzzolanique. A partir de ces essais systématiques, il a pu optimiser la composition des liants en vue d'obtenir des liants présentant un faible retrait, des temps de prise réglables, notamment des temps de prise rapide et une bonne résistance mécanique dès les premières heures, tout en respectant au mieux l'environnement, en limitant les dégagements de CO₂ et l'énergie nécessaire à la cuisson de la matière première.

On précise ici que dans tout le présent document, lorsque l'on fait référence au dégagement de CO₂, il s'agit du dégagement lié à la décarbonatation et que cette émission de CO₂ liée à la décarbonatation résulte d'un calcul.

Il s'agit d'un calcul effectué à partir de la composition chimique initiale de la matière première utilisée pour l'élaboration du ciment (encore désignée par cru). A partir de la composition chimique du cru exprimée en oxydes (essentiellement CaO et MgO), on calcule le titre en carbonate et on détermine par le calcul la masse de CO₂ correspondant que l'on rapporte à la tonne de clinker.

On donne ci-après des définitions de termes qui seront utilisés dans le présent document et qui sont, en général, en accord avec la norme européenne EN197-1 :
- par liant hydraulique au sens de l'invention, on entend un matériau minéral qui, mélangé avec de l'eau forme une pâte qui fait prise et durcit par suite de réactions et de processus d'hydratation et qui conserve sa résistance et sa stabilité, même sous l'eau après durcissement.
- par ciment courant (CEM), on entend des liants hydrauliques dont le durcissement hydraulique est principalement dû à l'hydratation des silicates de calcium. D'autres composés chimiques tels que les aluminates participent à ce processus de durcissement.

L'ensemble des composés chimiques contenus dans un ciment CEM forme, après cuisson aux alentours de 1450°C, ce que l'on appelle le clinker.

Les ciments diffèrent entre eux par leurs propriétés et leurs performances.

On se référera ici aux essais de performance tels qu'ils sont définis dans la norme européenne EN197-1. Cette norme définit et présente les spécifications de 27 ciments dits ciments courants dont la composition est donnée dans le tableau I figurant en fin de description.
- Par ciment naturel, on entend un ciment résultant du traitement thermique d'une seule matière première, par opposition à un ciment artificiel, de type Portland.
- Par ciment prompt naturel, on entend un ciment à prise et durcissement rapide, résultant de la cuisson à température modérée d'un calcaire argileux de composition régulière, extrait de bancs homogènes, et broyé très finement. Ce ciment est défini par la norme NFP 15-314.

Un tel ciment est caractérisé par la présence de silicate de calcium, essentiellement sous forme de silicate bicalcique actif, d'aluminate de calcium riche en calcium et de sulfo-aluminate de calcium.
- Par clinker, on entend le produit obtenu par calcination du matériau minéral traité.
- Par clinker Portland, on entend, comme défini dans la norme EN 197-1, le produit obtenu par calcination d'un mélange fixé avec précision de matières premières contenant des éléments couramment exprimés en oxydes (CaO, SiO₂, Al₂O₃, Fe₂O₃) et de petites quantités d'autres matières.
- Par matériau pouzzolanique, on entend des substances naturelles siliceuses ou silico-alumineuses, ou une combinaison de celles-ci mais également les cendres volantes et des fumées de silice ainsi que les matériaux à propriété pouzzolanique, en particulier, les matériaux de type laitier.
- Les liants hydrauliques sont utilisés avec du sable pour obtenir des mortiers.
- les liants hydrauliques sont utilisés avec du sable et du gravier pour obtenir des bétons.

Selon l'une de ses caractéristiques essentielles, l'invention concerne un liant hydraulique contenant en pourcentage en poids :
- 1,1 à 9% d'aluminate tricalcique
- 1,5 à 13,5 % de ferro aluminate tétracalcique
- 0,5 à 1,5% de dodécacalcium heptaaluminate
- 0,5 à 1,5% de sulfate de trialuminate tétracalcique
- 0 à 0,8% de silico aluminate dicalcique
- 5 à 70% de matériau(x) pouzzolanique(s)
- 0 à 6% de sulfate de calcium,
le reste étant constitué des constituants non-alumineux d'au moins un clinker de type Portland.

Comme exposé précédemment, la mise au point d'un liant hydraulique répondant à la composition ci-dessus, résulte d'essais systématiques effectués par l'inventeur en vue d'obtenir une composition de liant hydraulique présentant des propriété de durabilité caractérisées par une faible chaleur d'hydratation et un faible retrait au séchage et des propriétés d'application caractérisées par des temps de prise réglables et des résistances dès les premières heures qui rendent ces compositions comparables à des ciments de type CEM I, avec, en plus, des émissions de CO₂ et des dépenses énergétiques bien inférieures, comme cela ressort des tableaux qui sont donnés dans la partie « exemples ».

On précise que dans la composition qui est donnée ci-dessus, les différentes phases minéralogiques sont données par leurs constituants chimiques.

Le tableau II ci-dessous donne, pour différents constituants chimiques des compositions de liants et notamment ceux cités ci-dessus, leur dénomination chimique, leur formule chimique, la nomenclature de la phase minéralogique correspondante ainsi la que la nomenclature classiquement utilisée par les cimentiers.

**TABLEAU II**

| | | | |
|---|---|---|---|
| Silicate Tricalcique | 3CaO.SiO₂ | Alite | C₃S |
| Silicate Dicalcique | 2CaO.SiO₂ | Bélite | C₂S |
| Aluminate tricalcique | 3CaO.Al₂O₃ | Célite | C₃A |
| Ferro aluminate tétracalcique | 4CaO(Al₂O₃.Fe₂O₃) | Ferrite | C₄AF |
| Trialuminate sulfate tétracalcique | 4CaO.3Al₂O₃.SO₃ | Yé'élimite | C₄AS |
| Dodecacalcium heptaaluminate | 12CaO.7Al₂O₃ | Mayénite | C₁₂A7 |
| Silico aluminate dicalcique | 2CaO.Al₂O₃.SiO₂ | Géhlénite | C₂AS |

Les matériau(x) pouzzolanique(s) des compositions de l'invention sont choisis dans le groupe constitué des pouzzolanes naturelles, des pouzzolanes naturelles calcinées, des cendres volantes siliceuses, des cendres volantes calciques, de la fumée de silice et des laitiers, notamment des laitiers de haut fourneau, et de leurs mélanges.

Il s'agit là des matériaux pouzzolaniques classiquement utilisés dans l'industrie du ciment et que l'on retrouve classiquement dans les ciments courants dont la composition est donnée dans le tableau I.

Selon une variante avantageuse de l'invention, la proportion pondérale de matériau(x) pouzzolanique(s) est comprise entre 20 et 70% en poids.

Les essais réalisés par l'inventeur de la présente invention ont montré que, selon une variante particulièrement avantageuse, le liant était obtenu par mélange d'un ciment naturel, d'au moins un ciment courant de type CEM II, CEM III, CEM IV ou CEM V et de matériau(x) pouzzolanique(s).

Il est également apparu que les liants de l'invention sont avantageusement obtenus à partir du mélange d'au moins un ciment naturel, avec au moins un ciment de type Portland et au moins un matériau pouzzolanique dans des proportions telles que le ciment naturel représente 20 à 50% en poids dudit mélange et que le clinker de type Portland introduit par le ou lesdits ciments de type Portland représente 6 à 59% en poids dudit mélange.

Ce ciment naturel est avantageusement un ciment de type bélitique activé par des aluminates.

Par ailleurs, les propriétés de prise sont d'autant meilleures que les aluminates contenus dans la composition ont été cuits à des températures différentes. Un tel résultat est en particulier obtenu lorsque le ciment naturel est cuit à une température qui s'échelonne dans une large gamme, en particulier une gamme comprise entre 500 et 1300°C.

Il est également apparu dans les essais systématiques réalisés par l'inventeur de la présente invention que les qualités du ciment de l'invention sont largement liées à la réactivité des aluminates contenus dans la composition.

En effet, plus ces aluminates sont cuits à basse température, plus ils sont réactifs lors de leur hydratation, du fait qu'ils sont formés soit de très petits cristaux ou qu'ils sont mal cristallisés. Idéalement, pour obtenir le maximum de réactivité des différents aluminates de la composition, il faudrait les cuire isolément, chacun à leur température minimum de formation et ensuite les mélanger.

Une telle préparation n'est bien entendu pas réaliste.

C'est pourquoi on préfère utiliser des ciments naturels qui sont cuits dans des conditions telles que leur température de cuisson s'échelonne entre 500 et 1300°C, couvrant ainsi toutes les plages de températures optimales de ces aluminates.

Une telle gamme de températures permet d'obtenir, pour chacun des quatre aluminates réactifs présents dans la composition de l'invention, une fraction qui sera cuite à sa température optimale de réaction.

Par ailleurs, le ciment naturel contient avantageusement des aluminates présentant chacun au moins une fraction cuite à une température dite « température optimale de réactivité ».

Par température optimale de réactivité on entend, au sens de l'invention, la température à laquelle se forment les phases minérales qui auront la cinétique d'hydratation la plus rapide et qui provoquera par conséquent une prise et un durcissement rapides. Elle est différente (plus basse) de la température qui donnera le rendement maximal de formation du minéral.

Outre ces aluminates cuits chacun à une température optimale, la composition contient avantageusement de 40 à 70% de bélite, de 5 à 17% d'alite et de 0 à 15% de carbonate de calcium, ces différentes proportions étant exprimées en pourcentage en poids.

Selon une variante particulièrement avantageuse de l'invention, les compositions sont obtenues en utilisant, comme ciment naturel, le ciment prompt naturel qui est un ciment à prise et durcissement rapide résultant exclusivement de la cuisson à température modérée (1000 à 1200°C) d'un calcaire argileux de composition régulière, extrait de bancs homogènes puis très finement broyé.

Il est composé principalement de silicate, d'aluminate et de sulfo-aluminate de calcium ainsi que de petites quantités de chaux, de magnésie, de sulfate de calcium et de potassium et de traces d'autres éléments.

Comme exposé ci-dessus, les compositions de l'invention peuvent être obtenues par mélange d'au moins un ciment naturel, en particulier de ciment prompt naturel, avec un clinker de type Portland et au moins un matériau de type pouzzolanique et éventuellement avec du sulfate de calcium.

De telles compositions comprendront avantageusement, en poids :
- 20 à 50% de ciment naturel,
- 0 à 6% de sulfate de calcium,
- 6 à 63% de clinker de type Portland,
- 5 à 70% de matériau(x) pouzzolanique(s)

Les clinkers de type Portland compris dans ces compositions pourront être avantageusement introduits simultanément avec une partie des matériau(x) pouzzolanique(s) par l'intermédiaire de ciments classés CEM II, CEM III, CEM IV ou CEM V.

On pourra en particulier recourir à un ciment de type CEM III/B qui comprend, en poids, de 20 à 34 % de clinker et de 60 à 80% de laitier.

On pourra également utiliser un ciment CEM III (A, B ou C), de tels ciments contenant, en poids, de 5 à 64% de clinker et de 95 à 36% de laitier.

On pourra également utiliser des ciments de type CEM II ou des ciments composés de type CEM V ou des ciments pouzzolaniques de type CEM IV qui comprennent de 20 à 80%, en poids, de clinker ainsi que des composés pouzzolaniques tels que des laitiers, de la fumée de silice, de la pouzzolane naturelle, de la pouzzolane artificielle, des cendres volantes siliceuses, des cendres volantes calciques et/ou du schiste calciné dans des proportions comprises entre 80 et 20%.

Ainsi, une composition préférée de l'invention contiendra, en poids :
- de 20 à 50% de ciment naturel, en particulier de ciment prompt naturel,
- de 0 à 6% de sulfate de calcium,
- de 8 à 47% de clinker de type Portland,
- de 20 à 70% de matériau pouzzolanique, ce matériau pouzzolanique provenant avantageusement au moins en partie d'un ciment de type CEM III (A, B ou C).

Comme indiqué précédemment, l'avantage de toutes les compositions décrites ci-dessus est qu'elles peuvent être préparées avec des émissions de CO₂ liées à la decarbonatation particulièrement basses, notamment des émissions comprises entre 200 et 250 kg/t alors que ces émissions sont de l'ordre de 470 à 500 kg/t pour un ciment courant de type CEM I.

On notera que les chiffres donnés ci-dessus concernent uniquement les émissions de CO₂ provenant de la décarbonatation, les émissions de CO₂ provenant de la combustion des combustibles n'a pas été prise en compte puisqu'elle est variable en fonction de la qualité du combustible (notamment pour les CEM).

Un autre avantage de ces compositions est qu'elles peuvent être préparées en consommant des quantités d'énergie particulièrement basses. Ces quantités d'énergie pourront, grâce à l'invention, être abaissées d'au moins 50% par rapport à un ciment de type CEM I classique.

Un autre avantage encore de ces compositions est qu'elles présentent une chaleur d'hydratation particulièrement basse de l'ordre de 200 J/g alors que pour un ciment de type CEM I, elles sont généralement de l'ordre de 400 J/g.

Un autre avantage des compositions de l'invention est qu'elles conduisent à des ciments ayant de plus faibles retraits au séchage, généralement de l'ordre de 500 µm/m alors que les ciments CEM présentent généralement des retraits de 800 à 1000 µm/m.

Ces liants s'avèrent particulièrement intéressants du fait de leur temps de prise réglables de 30 min à 3 h et de leur résistance dès la ou les premières heures. On notera à ce propos que la norme EN 197-1 donne comme exigence de temps de début de prise :
- pour la classe 32,5 au moins 75 minutes,
- pour la classe 42,5 au moins 60 minutes et
- pour la classe 52,5 au moins 45 minutes.

Grâce à tous ces avantages, les liants de l'invention seront mis en oeuvre pour la préparation de différentes compositions à base de liants hydrauliques, en particulier des mortiers et des bétons, en particulier dans toutes les applications où l'on cherche des liants hydrauliques ne nécessitant pas une tenue de maniabilité de plus de deux heures.

On rappelle ici que la maniabilité ou ouvrabilité d'un béton désigne le temps où le béton doit conserver sa plasticité pour une mise en place correcte. Cette maniabilité ou ouvrabilité peut se définir comme la facilité de mise en oeuvre du béton pour le remplissage parfait du coffrage ou du ferraillage. De cette ouvrabilité dépendent la compacité et la résistance réelle du béton dans l'ouvrage lui-même, enrobage et adhérence à des armatures, cohésion du béton entraînant un moindre risque de ségrégation, parement de belle apparence, étanchéité... Cette durée doit être suffisamment longue pour permettre le transport et le coulage du béton. La maniabilité peut être contrôlée en particulier par des essais de type « affaissement au cône d'Abrams » suivant la norme NF P 18 451.

Ainsi, l'invention concerne également, selon l'une de ses caractéristiques essentielles, des bétons et mortiers contenant les liants hydrauliques de l'invention décrits précédemment.

Les exemples ci-après sont donnés à titre purement illustratif de l'invention.

### EXEMPLES

On prépare deux compositions de liants hydrauliques selon l'invention que l'on note A et B par mélange d'un ciment naturel avec un ciment courant et un matériau pouzzolanique.

Ces compositions sont données dans le tableau III ci-dessous :

**TABLEAU III**

| | A | B |
|---|---|---|
| C3A | 3,2% | 3,7% |
| C4AF | 4,9% | 5,9% |
| C12A7 | 1% | 1,4% |
| C4A3S | 1% | 1,4% |
| C2A4 | 0,5% | 0,7% |
| C2S | 23,5% | 30% |
| C3S | 10% | 11,8% |
| CaCO₃ | 5% | 7% |
| Sulfate de calcium | 5,2% | 6% |
| Laitier | 37% | 25,2% |
| Fumée de silice | 6% | 8% |

Ces compositions sont comparées avec un ciment témoin, ci-après désigné par T, de type CEM I 52.5.

Les tableaux IV, V, VI et VII donnent respectivement, pour les compositions A et B de l'invention ainsi que pour le témoin T :
- Tableau IV : le bilan énergétique et les émissions de CO₂,
- Tableau V : la chaleur d'hydratation mesurée sur mortier selon la norme NFP15-436 et le retrait au séchage à 28 j pour des mortiers dans lesquels le rapport ciment/sable est de 1/3 et le rapport eau/ciment de 0,5,
- Tableaux VI et VII : différentes propriétés mécaniques (maniabilité, résistance à la compression, retrait, température maximale du béton), respectivement pour deux types de bétons adjuvantés, autocompactant et précontraints de préfabrication dont les dosages sont donnés dans les deux premières lignes de chaque tableau, chacun de ces bétons contenant en outre une adjuvantation classique (superplastifiant de type polycarboxylate, retardateur de prise de type citrate trisodique et accélérateurs de durcissement de type carbonate de lithium et carbonate de sodium).

On sait que, dans les bétons dits « bétons de masse », destinés à des applications en fortes épaisseurs, la chaleur dégagée par l'hydratation du béton sera plus importante à l'intérieur qu'en surface à cause des déperditions en surface au contact de l'air. L'expansion du béton est suivie par une contraction lors de son refroidissement. Les amplitudes étant fonction de l'épaisseur, des contraintes différentielles de traction apparaîtront pouvant mener à une fissuration. Une montée en température plus faible du béton est donc un gage de durabilité.

C'est pourquoi l'indication de la température dite « température maximale » mesurée dans le cas présent dans des moules cylindriques 16 cm de diamètre et de 32 cm de hauteur en condition quasi-adiabatique donne une bonne indication quant à la durabilité du béton.

**TABLEAU IV**

| | Bilan énergétique (kJ/kg ciment) | Emission CO2 (kg/tonne de ciment) |
|---|---|---|
| T | 2939 | 480 |
| A | 1114 | 215 |
| B | 1470 | 245 |

**TABLEAU V**

| | Chaleur d'hydratation (J/g) | Retrait de séchage à 28 j (µm/m) |
|---|---|---|
| T | 400 | 800 |
| A | 259 | 500 |
| B | 260 | 500 |

**TABLEAU VI**

| | Béton autocompactant | | |
|---|---|---|---|
| | T | A | B |
| Dosage | 320 kg/m³ | 320 kg/m³ | 320 kg/m³ |
| Eau/ciment | 0.62 | 0.53 | 0.53 |
| Tenue maniabilité | 2 h | 2 h | 2 h |
| Résistance en compression 3h | 0 MPa | 3 MPa | 7 MPa |
| " 24 h | 11 MPa | 7 MPa | 11 MPa |
| " 7 j | 31 MPa | 12 MPa | 18.2 MPa |
| " 28 j | 38.8 MPa | 19 MPa | 39.3 MPa |
| " 91 j | 42.8 MPa | 50MPa | 50 MPa |
| Retrait 28 j | 378 µm/m | 193 µm/m | 240 µm/m |
| T° maxi béton | 35°C | 30°C | 31°C |

**TABLEAU VII**

| | Béton précontraint de préfabrication | | |
|---|---|---|---|
| | T | A | B |
| Dosage | 405 kg/m³ | 405 kg/m³ | 405 kg/m³ |
| Eau/ciment | 0.38 | 0.3 | 0.3 |
| Tenue maniabilit | > 30 min | > 30 min | > 30 min |
| Résistance en compression 3h | 0 MPa | 15 MPa | 25 MPa |
| " 15 h | 33 MPa | 21 MPa | 34 MPa |
| " 24 h | 45 MPa | 30 MPa | 42 MPa |
| " 7 j | 57 MPa | 40 MPa | 52.9 MPa |
| " 28 j | 62 MPa | 63 MPa | 63.5 MPa |
| Retrait 28 j | 449 µm/m | 283 µm/m | 246 µm/m |
| T° maxi béton | 46°C | 31°C | 33°C |

Les différents tableaux IV, V, VI et VII montrent clairement que l'émission de CO₂ est nettement plus faible avec une composition de l'invention qu'avec le ciment témoin et qu'il en est de même du bilan énergétique.

Par ailleurs, les tableaux VI et VII montrent que les propriétés de résistance à la compression sont tout à fait comparables à celles obtenues avec celle d'un béton préparé à partir d'un ciment témoin de type CEM I.

On note également au vu de ces deux tableaux que les propriétés de résistance à la compression sont tout à fait comparables à celles obtenues avec le béton préparé à partir d'un ciment témoin de type CEM I et que le retrait de séchage ainsi que la température maximum des bétons de l'invention sont inférieurs à celles du béton témoin.

Ainsi, il est donc parfaitement envisageable avec les compositions de l'invention d'avoir des applications analogues à celles des ciments de type CEM I tout en ayant une réduction significative des émissions de CO₂, un bilan thermique nettement plus faible et une chaleur d'hydratation beaucoup plus faible avec des retraits également plus faibles.

**TABLEAU I**

| Les 27 produits de la famille des ciments français | | | | | | | | | | | | | |
|---|---|---|---|---|---|---|---|---|---|---|---|---|---|
| Principaux types | Notation des 27 produits (types de ciment courant) | | Composition (pourcentage en masse) a) | | | | | | | | | | |
| | | | Constituants principaux | | | | | | | | | | |
| | | | Clin-ker | Laitier de haut fourneau | Fumée de silice | Pouzzolanes | | Cendres volantes | | Schiste calciné | Calcaire | | Constit uants secon daires |
| | | | | | | Naturelle | Naturelle calcinée | Silicieuse | Calcique | | | | |
| | | | K | S | D b) | P | Q | V | W | T | L | LL | |
| CEM I | Ciment Portland | CEM-I | 95-100 | - | - | - | - | - | - | - | - | - | 0-5 |
| | Ciment Portland au laitier | CEM II/A-S | 80-94 | 6-20 | - | - | - | - | - | - | - | - | 0-5 |
| | | CEM II/B-S | 65-79 | 21-35 | - | - | - | - | - | - | - | - | 0-5 |
| | Ciment Portland à la fumée de silice | CEM II/A-D | 90-94 | - | 6-10 | - | - | - | - | - | - | - | 0-5 |
| | Ciment Portland à la pouzzolane | CEM II/A-P | 80-94 | - | - | 6-20 | - | - | - | - | - | - | 0-5 |
| | | CEM II/B-P | 65-79 | - | - | 21-35 | - | - | - | - | - | - | 0-5 |
| | | CEM II/A-Q | 80-94 | - | - | - | 6-20 | - | - | - | - | - | 0-5 |
| CEM II | | CEM II/B-Q | 65-79 | - | - | - | 21-35 | - | - | - | - | - | 0-5 |
| | Ciment Portland aux cendres volantes | CEM II/A-V | 80-94 | - | - | - | - | 6-20 | - | - | - | - | 0-5 |
| | | CEM II/B-V | 65-79 | - | - | - | - | 21-35 | - | - | - | - | 0-5 |
| | | CEM II/A-W | 80-94 | - | - | - | - | - | 6-20 | - | - | - | 0-5 |
| | | CEM II/B-W | 65-79 | - | - | - | - | - | 21-35 | - | - | - | 0-5 |
| | Ciment Portland au | CEM II/A-T | 80-94 | - | - | - | - | - | - | 6-20 | - | - | 0-5 |
| | schiste calciné | CEM II/B-T | 65-79 | - | - | - | - | - | - | 21-35 | - | - | 0-5 |
| | Ciment Portland au calcaire | CEM II/A-L | 80-94 | - | - | - | - | - | - | - | 6-20 | - | 0-5 |
| | | CEM II/B-L | 65-79 | - | - | - | - | - | - | - | 21-35 | - | 0-5 |
| CEM II | | CEM II/A-LL | 80-94 | - | - | - | - | - | - | - | - | 6-20 | 0-5 |
| | | CEM II/B-LL | 65-79 | - | - | - | - | - | - | - | - | 21-35 | 0-5 |
| | Ciment Portland composé c) | CEM II/A-M | 80-94 | ←------------------------------ 6-20 ------------------------------→ | | | | | | | | | 0-5 |
| | | CEM II/B-M | 65-79 | ←------------------------------ 21-35 ------------------------------→ | | | | | | | | | 0-5 |
| CEM III | Ciment de haut fourneau | CEM III/A | 35-64 | 36-65 | - | - | - | - | - | - | - | - | 0-5 |
| | | CEM III/B | 20-34 | 66-80 | - | - | - | - | - | - | - | - | 0-5 |
| | | CEM III/C | 5-19 | 81-95 | - | - | - | - | - | - | - | - | 0-5 |
| CEM IV | Ciment pouzzolanique c) | CEM IV/A | 65-89 | - | ←------ 11-35 ------→ | | | | | - | - | - | 0-5 |
| | | CEM IV/B | 45-64 | - | ←------ 11-35 ------→ | | | | | - | - | - | 0-5 |
| CEM V | Ciment et composé c) | CEM V/A | 40-34 | 18-30 | - | ← 18-30 → | | | - | - | | - | 0-5 |
| | | CEM V/B | 20-38 | 31-50 | - | ← 31-50 → | | | - | - | - | - | 0-5 |

| | | | | | | | | | | | | | |
|---|---|---|---|---|---|---|---|---|---|---|---|---|---|
| a) Les valeurs indiquées se réfèrent à la somme des constituants principaux et secondaires b) La proportion de fumées de silice est limitée à 10% c) Dans le cas des ciments Portland composés CEM II/A-M et CEM II/B-M, des ciments pouzzolaniques CEM IV/A et CEM IV/B et des ciments composés CEM V/A et CEM V/B, les constituants principaux, autres que le clinker, doivent être déclarés dans la désignation du ciment | | | | | | | | | | | | | |

## Revendications

1. Liant hydraulique, **caractérisé en ce qu'**il contient, en pourcentage en poids :
- 1,1 à 9% d'aluminate tricalcique
- 1,5 à 13,5 % de ferro aluminate tétracalcique
- 0,5 à 1,5% de dodécacalcium heptaaluminate
- 0,5 à 1,5% de sulfate de trialuminate tétracalcique
- 0 à 0,8% de silico aluminate dicalcique
- 5 à 70% de matériau(x) pouzzolanique(s)
- 0 à 6% de sulfate de calcium,
le reste étant constitué des constituants non-alumineux d'au moins un clinker de type Portland.

2. Liant hydraulique selon la revendication 1, **caractérisé en ce que** les matériau(x) pouzzolanique(s) sont choisis dans le groupe constitué de pouzzolanes naturelles, des pouzzolanes naturelles calcinées, des cendres volantes siliceuses, des cendres volantes calciques, de la fumée de silice et des laitiers, notamment des laitiers de haut fourneau, et de leurs mélanges.

3. Liant selon la revendication 1 or 2, **caractérisé en ce qu'**il contient de 20 à 70% en poids de matériau(x) pouzzolanique(s).

4. Liant selon l'une des revendications 1 à 3, **caractérisé en ce qu'**il est obtenu par mélange d'un ciment naturel, d'au moins un ciment courant de type CEM II, CEM III, CEM IV ou CEM V et de matériau(x) pouzzolanique(s).

5. Liant hydraulique selon l'une des revendications 1 à 4, **caractérisé en ce qu'**il résulte du mélange d'au moins un ciment naturel, avec au moins un ciment de type Portland et au moins un matériau pouzzolanique dans des proportions telles que le ciment naturel représente 20 à 50% en poids dudit mélange et que le clinker de type Portland introduit par le ou lesdits ciments de type Portland représente 6 à 59% en poids dudit mélange.

6. Liant selon la revendication 4 ou 5, **caractérisé en ce que** ledit ciment naturel est un ciment de type bélitique activé par des aluminates.

7. Liant selon l'une des revendications 1 à 6, **caractérisé en ce que** les aluminates qu'il contient ont été cuits à des températures différentes.

8. Liant selon l'une des revendications 1 à 7, **caractérisé en ce qu'**il contient un ciment naturel dont la température de cuisson s'échelonne entre 500 et 1300°C.

9. Liant selon la revendication 8, **caractérisé en ce que** ledit ciment naturel contient des aluminates tels que définis dans la revendication 1 présentant chacun au moins une fraction cuite à une température optimale de réactivité, les autres phases minéralogiques étant essentiellement constituées de :
- bélite (C2S) : 40 à 70%,
- alite (C3S) : 5 à 17%,
- carbonate de calcium : 0 à 15%, les différentes proportions étant exprimées en poids.

10. Liant selon l'une des revendications 1 à 9, **caractérisé en ce qu'**il contient de 20 à 50% en poids de ciment prompt naturel.

11. Liant selon l'une des revendications 1 à 9, **caractérisé en ce qu'**il contient :
- de 20 à 50% en poids de ciment naturel, en particulier de ciment prompt naturel,
- de 0 à 6% de sulfate de calcium,
- de 8 à 47% de clinker de type Portland,
- 20 à 70% de matériau(x) pouzzolanique(s),

12. Bétons ou mortiers, **caractérisés en ce qu'**ils sont préparés en utilisant un liant tel que défini dans l'une des revendications 1 à 11 comme liant hydraulique.

## Claims

1. Hydraulic binder, **characterized in that** it contains, in percentage by weight:
- from 1.1 to 9% of tricalcium aluminate
- from 1.5 to 13.5% of tetracalcium ferroaluminate
- from 0.5 to 1.5% of dodecacalcium heptaaluminate
- from 0.5 to 1.5% of tetracalcium trialuminate sulphate
- from 0 to 0.8% of dicalcium silicoaluminate
- from 5 to 70% of pozzolanic material(s)
- from 0 to 6% of calcium sulphate
the remainder being composed of the non-aluminous constituents of at least one Portland-type clinker.

2. Hydraulic binder according to claim 1, **characterized in that** the pozzolanic material(s) is/are selected from the group consisting of natural pozzolans, calcined natural pozzolans, siliceous fly ashes, calcium fly ashes, silica fumes and slags, in particular blast-furnace slags, and mixtures thereof.

3. Binder according to claim 1 or 2, **characterized in that** it contains from 20 to 70% by weight of pozzolanic material(s).

4. Binder according to any one of claims 1 to 3, **characterized in that** it is obtained by mixing of a natural cement, at least one CEM II, CEM III, CEM IV or CEM V-type common cement and pozzolanic material(s).

5. Hydraulic binder according to any one of claims 1 to 4, **characterized in that** it results from the mixing of at least one natural cement with at least one Portland-type cement and at least one pozzolanic material in proportions such that the natural cement represents from 20 to 50% by weight of said mixture and that the Portland-type clinker introduced by said Portland-type cement or cements represents from 6 to 59% by weight of said mixture.

6. Binder according to claim 4 or 5, **characterized in that** said natural cement is a belite-type cement activated by aluminates.

7. Binder according to any one of claims 1 to 6, **characterized in that** the aluminates which it contains were baked at different temperatures.

8. Binder according to any one of claims 1 to 7, **characterized in that** it contains a natural cement, the baking temperature of which varies from 500 to 1,300°C.

9. Binder according to claim 8, **characterized in that** said natural cement contains aluminates as defined in claim 1, each having at least one fraction baked at an optimum reactivity temperature, the other mineralogical phases basically consisting of:
- belite (C2S): from 40 to 70%
- alite (C3S): from 5 to 17%
- calcium carbonate: from 0 to 15%, the various proportions being expressed by weight.

10. Binder according to any one of claims 1 to 9, **characterized in that** it contains from 20 to 50% by weight of natural quick-setting cement.

11. Binder according to any one of claims 1 to 9, **characterized in that** it contains:
- from 20 to 50% by weight of natural cement, in particular natural quick-setting cement
- from 0 to 6% of calcium sulphate
- from 8 to 47% of Portland-type clinker
- from 20 to 70% of pozzolanic material(s).

12. Concretes or mortars, **characterized in that** they are prepared using a binder as defined in any one of claims 1 to 11 as a hydraulic binder.

## Patentansprüche

1. Hydraulisches Bindemittel, **dadurch gekennzeichnet, daß** es in Gewichtsprozent folgendes enthält:
- 1,1 bis 9 % Tricalciumaluminat
- 1,5 bis 13,5 % Tetracalcium-Ferro-Aluminat
- 0,5 bis 1,5 % Dodeca-Calcium-Hepta-Aluminat
- 0,5 bis 1,5 % Tetracalcium-Trialuminatsulfat
- 0 bis 0,8 % Dicalcium-Aluminiumsilikat
- 5 bis 70 % puzzolanische(s) Material(ien)
- 0 bis 6% Calciumsulfat,
wobei der Rest von den nicht tonerdehaltigen Bestandteilen wenigstens eines Klinkers vom Portland-Typ gebildet ist.

2. Hydraulisches Bindemittel nach Anspruch 1, **dadurch gekennzeichnet, daß** das (die) puzzolanische(n) Material(ien) aus der Gruppe bestehend aus natürlichen Puzzolanen, kalzinierten natürlichen Puzzolanen, kieselsäurehaltigen Flugaschen, kalkhaltigen Flugaschen, Feinkieselerde sowie Schlacken, insbesondere Hochofenschlacken, sowie ihren Mischungen ausgewählt ist bzw. sind.

3. Bindemittel nach Anspruch 1 oder 2, **dadurch gekennzeichnet, daß** es 20 bis 70 Gew.-% puzzolanische(s) Material(ien) enthält.

4. Bindemittel nach einem der Ansprüche 1 bis 3, **dadurch gekennzeichnet, daß** es durch Mischen eines Naturzements, wenigstens eines üblichen Zements vom Typ CEM II, CEM III, CEM IV oder CEM V und puzzolanischem Material (puzzolanischen Materialien) erhalten wird.

5. Hydraulisches Bindemittel nach einem der Ansprüche 1 bis 4, **dadurch gekennzeichnet, daß** es **dadurch** erhalten wird, daß wenigstens ein Naturzement mit wenigstens einem Zement vom Portland-Typ und wenigstens einem puzzolanischen Material in derartigen Verhältnissen gemischt wird, daß der Naturzement 20 bis 50 Gew-% der Mischung ausmacht und daß der über den oder die Zement(e) vom Portland-Typ eingebrachte Klinker vom Portland-Typ 6 bis 59 Gew.-% der Mischung ausmacht.

6. Bindemittel nach einem der Ansprüche 4 oder 5, **dadurch gekennzeichnet, daß** der Naturzement ein Zement von der Art durch Aluminate aktivierter Belitzement ist.

7. Bindemittel nach einem der Ansprüche 1 bis 6, **dadurch gekennzeichnet, daß** die Aluminate, die es enthält, bei unterschiedlichen Temperaturen gebrannt wurden.

8. Bindemittel nach einem der Ansprüche 1 bis 7, **dadurch gekennzeichnet, daß** es einen Naturzement enthält, dessen Brenntemperatur zwischen 500 und 1300°C liegt.

9. Bindemittel nach Anspruch 8, **dadurch gekennzeichnet, daß** der Naturzement Aluminate enthält, wie sie in Patentanspruch 1 definiert sind, die jeweils wenigstens einen bei einer optimalen Reaktivitätstemperatur gebrannten Anteil enthalten, wobei die anderen mineralogischen Phasen im wesentlichen aus folgendem bestehen:
- Belit (C2S): 40 bis 70 %,
- Alit (C3S): 5 bis 17 %,
- Calciumcarbonat: 0 bis 15 %, wobei die verschiedenen Verhältnisse in Gewichtsprozent ausgedrückt sind.

10. Bindemittel nach einem der Ansprüche 1 bis 9, **dadurch gekennzeichnet, daß** es 20 bis 50 Gew.-% schnellabbindenden Naturzement enthält.

11. Bindemittel nach einem der Ansprüche 1 bis 9, **dadurch gekennzeichnet, daß** es folgendes enthält:
- 20 bis 50 Gew.-% Naturzement, insbesondere schnellabbindenden Naturzement,
- 0 bis 6 % Calciumsulfat,
- 8 bis 47 % Klinker vom Portland-Typ,
- 20 bis 70 % puzzolanische(s) Material(ien).

12. Betone oder Mörtel, **dadurch gekennzeichnet, daß** sie unter Verwendung eines Bindemittels, wie es in einem der Ansprüche 1 bis 11 als hydraulisches Bindemittel definiert ist, hergestellt werden.
